Europäisches Patentamt

European Patent Office

Office européen des brevets

(19)

(11) Numéro de publication : **0 030 721**
**B1**

(12) **FASCICULE DE BREVET EUROPÉEN**

(45) Date de publication du fascicule du brevet :
25.07.84

(21) Numéro de dépôt : **80107857.7**

(22) Date de dépôt : **12.12.80**

(51) Int. Cl.³ : **H 01 B 13/00**, C 25 D 5/50, C 23 C 1/06

(54) **Procédé de fabrication de câble électrique souple avec âme multibrins étamée et isolation appliquée à haute température.**

(30) Priorité : **18.12.79 FR 7930995**

(43) Date de publication de la demande :
**24.06.81 Bulletin 81/25**

(45) Mention de la délivrance du brevet :
**25.07.84 Bulletin 84/30**

(84) Etats contractants désignés :
**BE CH DE FR GB IT LI NL SE**

(56) Documents cités :
**GB-A- 946 421**
**GB-A- 1 127 413**
**US-A- 4 082 591**

(73) Titulaire : **FILOTEX S.A. dite**
**140-146, rue Eugène Delacroix**
**F-91210 Draveil (FR)**

(72) Inventeur : **Bascou, Edith**
**32, avenue Emile Fruchard**
**F-91210 Draveil (FR)**
Inventeur : **Ferlier, Jean-Pierre**
**21, rue Frédéric Koelher**
**F-91330 Yerres (FR)**

(74) Mandataire : **Weinmiller, Jürgen**
**Zeppelinstrasse 63**
**D-8000 München 80 (DE)**

Jouve, 18, rue St-Denis, 75001 Paris, France

## Description

La présente invention concerne un procédé de fabrication de câble électrique souple avec âme multibrins étamée et isolation appliquée à haute température.

On utilise fréquemment notamment en construction aéronautique, des câbles électriques qui doivent présenter à un haut degré diverses qualités concourant à la fiabilité des liaisons réalisées par leur intermédiaire. Trois qualités sont notamment importantes : la souplesse de l'âme, nécessaire pour éviter les risques de cassures et obtenue en utilisant une âme « multibrins » constituée d'un ensemble de brins de cuivre de quelques dixièmes de millimètre de diamètre, la tenue électrique et mécanique de la gaine d'isolation, nécessaire pour éviter les risques de court-circuits et obtenue à l'aide d'isolants performants, et la fiabilité des connexions réalisées pour soudure ou sertissage aux extrémités de ces câbles, cette dernière fiabilité étant obtenue par des revêtements métalliques qui sont déposés sur les brins pour empêcher l'oxydation superficielle du cuivre et faciliter le contact électrique.

Un matériau d'isolation particulièrement intéressant est constitué par des polyimides, telles que commercialisées par exemple par la Société américaine Dupont de Nemours sous forme de ruban sous les marques de commerce « Kapton H » et « Kapton F », le ruban étant dans ce dernier cas pourvu d'un revêtement thermoplastique permettant sa soudure.

Les câbles à isolation en polyimide Kapton verni ou non verni, voient leur domaine d'application s'étendre et se diversifier de façon rapide et importante, grâce à l'ensemble de leurs performances inégalé à ce jour.

Une des limitations essentielle à leur développement a toujours été le coût de tels câbles, celui-ci étant fonction du prix des matières premières et de la technique de fabrication de ces câbles.

Au niveau matières premières, la seule vraie variable influençant notablement le prix des câbles, est la nature de l'âme. Or il était admis que seules des âmes en cuivre à revêtement métallique haute température tels que l'argent et le nickel pouvaient être utilisés avec les polyimides Kapton F :
— l'argent présentant toute garantie technique, mais d'un prix très élevé,
— le nickel d'un prix moins élevé, quoiqu'encore important et, surtout ne répondant pas à la condition de soudabilité, indispensable à nombre d'utilisateurs.

La nécessité d'utiliser ces revêtements métalliques coûteux à longtemps paru évidente aux fabricants et utilisateurs, pour les raisons techniques ci-dessous.

Considérons un câble connu comportant une âme à brins divisés, une isolation rubanée en polyimide Kapton, et un verni extérieur de protection mécanique.

Pour l'essentiel de leur utilisation, et en particulier en aéronautique, l'isolation de ces câbles doit être parfaitement étanche et homogène. Or les polyimides, n'étant pas thermoplastiques, ne peuvent être appliqués par la technique d'extrusion la plus classique en câblerie. Seul un processus de rubanage peut être utilisé sous réserve de parfaitement souder entre elles les différentes couches de ruban.

Pour y parvenir, il est nécessaire de choisir des rubans non entièrement polyimide, mais possédant sur une ou deux de leurs faces une mince couche d'un matériau thermoplastique haute température, susceptible de se ramollir lors d'un traitement thermique. C'est le cas du ruban polyimide Kapton F, dont la composante thermoplastique est du fluoroéthylènepropylène ou FEP dont le point de ramollissement se situe vers 275 à 280 C.

De façon à rendre la surface externe des câbles plus lisse, en « noyant » les côtes ou surépaisseurs liées à la technique de rubanage, il est de pratique courante de revêtir ces isolations polyimide de vernis haute température, appliqué en plusieurs couches successives, nécessitant une cuisson du vernis à chaque couche déposée. Les températures de vernissage doivent généralement excéder 250 C.

La description de ces processus de fabrication permet de comprendre pourquoi des âmes à revêtement en argent ou en nickel paraissaient, seules compatibles avec ces processus, bien que le prix du cuivre nu et du cuivre étamé soient beaucoup plus attrayant.

En effet :
— le cuivre nu va s'oxyder lors de tous ces traitements thermiques et présentera en utilisation un état de surface peu approprié à tout type de connexion, que ce soit par soudure ou par sertissage,
— le cuivre étamé a un revêtement métallique dont le point de fusion de 232 C est sensiblement inférieur aux 275 C requis pour souder entre eux les rubans de polyimide Kapton F et, dans ces conditions, il est en principe impossible de souder ces rubans sans coller entre eux les brins de l'âme. Or ceci est inadmissible, car cela revient à utiliser une âme non plus à brins divisés, mais à brin unique ne résistant pas aux contraintes mécaniques rencontrées en particulier sur avion, où les notions de résistance aux vibrations et de tenue aux flexions sont des critères vitaux pour les câbles, seules des âmes à brins divisés, non collés, offrant toute garantie. La difficulté technique dans la fabrication des câbles en question est de concilier deux clauses qui se rencontrent dans les contrats de fourniture de ces câbles :

clause 1 ne pas coller les brins de cuivre étamé au cours des diverses opérations de fabrication des câbles, ceci pour conserver la souplesse de l'âme.

clause 2 conserver au cuivre étamé ses caractéristiques intrinsèques essentielles de :
— résistance à la corrosion en service

**0 030 721**

— facilité de connexion, via toute technique de soudure ou sertissage.

Pour satisfaire simultanément à ces deux clauses, un processus connu est actuellement utilisé. Mais il ne présente absolument pas la fiabilité souhaitable dans ce domaine : il consiste à partir d'une épaisseur d'étain libre, à la surface des brins, suffisante pour qu'il en subsiste en fin de fabrication, cette épaisseur étant comprise entre 0,7 et 1,5 microns environ.

Comme la diffusion la plus importante se produit lors du premier traitement thermique (à 275/280 C) de soudure des rubans polyimide Kapton F, durant lequel l'épaisseur d'étain libre chute environ de moitié, on peut songer à ne réaliser qu'imparfaitement cette soudure, c'est-à-dire à ne parfaitement coller que le ruban externe et partiellement seulement le ruban interne. Ce processus présente théoriquement les avantages suivants :

— grâce à l'inertie thermique des isolants, l'âme n'aura pas le temps d'être portée à une température excédant 232 C.

— l'absence ou l'imperfection de la soudure des couches du ruban interne élimine la pression de l'isolant sur l'âme et diminue le risque de collage des brins.

Si cette technique est théoriquement valable, son utilisation présente les inconvénients et dangers latents incontrôlables suivants :

— mauvaise soudure des couches internes de ruban polyimide, difficilement rattrapable au cours des opérations ultérieures de fabrication (vernis) qui sont normalement réalisées à température plus basse que l'opération de soudure des rubans

— collage erratiques et difficilement contrôlables des brins de l'âme. On joue en effet sur les facteurs durée et température du traitement thermique avec une très faible marge de manœuvre et sans jamais pouvoir contrôler, donc garantir, que sur toute la longueur du câble fabriqué, le non collage des brins est une réalité. Un tel processus ne présente donc pas la fiabilité requise pour des câbles d'importance vitale.

Ce processus connu étant écarté, il reste que les clauses 1 et 2 indiquées ci-dessus sont très difficile à concilier, car pour répondre à la clause 2, il faut obligatoirement que les brins de cuivre étamé de l'âme comportent sur câble terminé à l'issue de toutes les opérations thermiques de fabrication, une couche superficielle d'étain libre, c'est-à-dire non allié. Or tout traitement thermique tend à faire diffuser l'étain dans le cuivre, la vitesse de diffusion étant fonction de la température et du temps du traitement thermique ainsi que de l'histoire thermique du cuivre étamé. Les couches métalliques créées par cette diffusion sont, à partir du cœur des fils constituées par :

| | |
|---|---|
| Cu | cuivre pur (ces deux couches étant facilement oxydables |
| $Cu_3Sn$ | alliage riche en cuivre |
| $Cu_3Sn_5$ | alliage relativement protecteur |
| Sn | étain pur protecteur. |

A noter qu'il existe toujours, lors de la fabrication des fils en cuivre étamé, une couche intermétallique d'alliages étain/cuivre, mais d'épaisseur faible et voisine de 0,1 micron.

La diffusion thermique va tendre à diminuer l'épaisseur de la couche d'étain pur jusqu'à éventuellement, la faire complètement disparaître, au profit de l'alliage $Cu_6Sn_5$, qui — cas extrême — pourra même disparaître, ne laissant plus que la configuration suivante :

Cu
$Cu_3Sn$

Un tel résultat est catastrophique du fait que $Cu_3Sn$ s'oxyde facilement, n'est pas ductile et conduit à des textures fragilisées et cassantes. Il faut donc, pour pallier ce défaut, utiliser pour la fabrication de ces câbles, des brins de cuivre étamé à épaisseur d'étain libre minimale mais cependant suffisante pour que, sur le câble terminé, il subsiste une couche superficielle d'étain libre.

Il n'apparaît pas possible dans ces conditions, en dehors du processus connu précédemment décrit, de satisfaire en même temps à la clause 1, car, lors de l'application de la gaine isolante rubanée, on est amené à mettre l'âme en compression radiale, puis, lors de la soudure des couches de rubans et lors du vernissage, à la porter à une température supérieure à celle de la fusion de l'étain.

La présente invention a pour but la réalisation d'un procédé de fabrication de câble électrique souple avec âme multibrins étamée et isolation appliquée à haute température, permettant d'obtenir de manière simple et sûre des câbles souples bien isolés et faciles à connecter de manière fiable.

Elle a pour objet un procédé de fabrication de câble électrique souple avec âme multibrins étamée et isolation appliquée à haute température, procédé comportant les étapes suivantes :

— préparation d'une âme souple constituée de plusieurs brins de cuivre étamés non soudés les uns aux autres,

— et isolation de cette âme par une gaine isolante appliquée à une température capable de créer un risque de fusion de l'étain et de soudure des brins étamés les uns aux autres, tout en entraînant une diffusion partielle de l'étain dans le cuivre,

— procédé caractérisé par le fait qu'il comporte en outre, une étape de création de barrière de diffusion entre et/ou avant lesdites étapes de préparation d'une âme souple et d'isolation de cette âme,

3

cette étape de création d'une barrière de diffusion incluant un chauffage des brins individuels ou assemblés à une température et pendant une durée assurant une diffusion préalable de l'étain dans le cuivre en quantité suffisante pour entraîner un ralentissement de la diffusion ultérieure de l'étain dans le cuivre durant l'étape d'isolation, de manière que de l'étain libre subsiste à la fin de cette étape d'isolation bien que l'épaisseur d'étain libre sur les brins au début de cette étape soit suffisamment faible pour éviter le risque de soudure entre brins.

De préférence la barrière de diffusion est créée à une température comprise entre 100 et 300 C.

De préférence l'épaisseur d'étain libre à la suite de cette création est comprise entre 1/3 et 3/4 de sa valeur avant cette création, valeur qui était de préférence encore comprise entre 0,6 et 1,2 micron.

De préférence l'étape d'isolation comporte elle-même les étapes suivantes :
— enroulement autour de l'âme de plusieurs couches de ruban sous tension mécanique,
— la formation de ladite gaine isolante résultant de la solidarisation des couches de ruban grâce à un chauffage à une température constituant ladite température d'application de la gaine isolante,
— cette formation incluant un revêtement par un vernis, séché et cuit par chauffage à haute température.

Le chauffage peut avoir pour but de souder les couches de ruban, et/ou de polymériser le vernis déposé sur ces couches.

Dans les conditions du procédé décrit le ruban est de préférence consitué d'une feuille mince de polyimide, mais pourrait bien entendu être constitué d'autres matériaux présentant des qualités électriques et mécaniques comparables.

La présente invention tient notamment au fait qu'il est apparu aux inventeurs que l'on pouvait satisfaire à la clause 1 ci-dessus (absence de soudure entre brins) à condition que l'épaisseur d'étain libre des brins étamés ne dépasse pas une certaine épaisseur, qui, en fonction du diamètre des fils de cuivre étamé utilisés, se situe entre 0,40 et 0,80 micron.

Il s'avère, en effet, que grâce peut être à un phénomène de tension superficielle, on peut porter à une température nettement supérieure au point de fusion de l'étain une âme de câble en cuivre étamé multibrins sans coller entre eux les brins individuels, dans les conditions particulières suivantes :
— soit si les brins de l'âme ne sont pas comprimés, c'est-à-dire soumis à une pression de l'isolation, à température excédant les 232 C de la fusion de l'étain
— soit si l'épaisseur d'étain libre n'excède pas les 0,4 à 0,8 micron indiqués ci-dessus.

Plus précisément l'épaisseur maximale d'étain libre permettant d'éviter le collage des brins aux températures mises en jeu (275 C et un peu au-dessus) dépend du diamètre des brins et de la pression exercée sur eux. Cette pression exercée par le rubanage isolant, est déterminée par la tension d'enroulement. Cette dernière doit être suffisante pour éviter toute poche d'air entre couches du ruban, c'est-à-dire de l'ordre de 1 000 à 3 000 g pour un ruban large de 7 mm, épais de 0,03 à 0,06 mm, en 2 à 4 couches, enroulé sur une âme de diamètre 1 mm. Dans les conditions pratiques de pression ainsi déterminées, l'épaisseur maximale d'étain dépend du diamètre des brins selon le tableau suivant :

| Diamètre des brins de cuivre, en mm | Epaisseur maximale d'étain libre, en microns |
|---|---|
| 0,127 | 0,40 |
| 0,160 | 0,50 |
| 0,200 | 0,55 |
| 0,250 | 0,60 |
| 0,287 et plus | 0,80 |

En pratique, pour obtenir une bonne souplesse du câble, on souhaite généralement utiliser des brins de diamètre inférieur à 500 microns.

Or des épaisseurs initiales d'étain libre inférieures à 0,6 micron ne peuvent conserver au cuivre étamé dans les conditions connues jusqu'à ce jour, une couche d'étain libre à l'issue des diverses opérations thermiques de fabrication de ces câbles à isolation en Kapton verni.

La présente invention permet d'utiliser, pour la constitution des âmes des câbles, du cuivre étamé à épaisseur d'étain libre ne dépassant pas les valeurs indiquées dans le tableau ci-dessus de façon à toujours garantir le non collage des brins, tout en assurant la conservation d'une couche d'étain libre suffisante pour que soient maintenues les caractéristiques indispensables de soudabilité et résistance à la corrosion du câble fini.

A l'aide des figures schématiques ci-jointes, on va décrire ci-après, à titre non limitatif, comment l'invention peut être mise en œuvre. Il doit être compris que les éléments décrits et représentés peuvent, sans sortir du cadre de l'invention, être remplacés par d'autres éléments assurant les mêmes fonctions techniques. Lorsqu'un même élément est représenté sur plusieurs figures il y est désigné par le même signe de référence.

La figure 1 représente une vue d'un câble souple susceptible d'être fabriqué par les procédés connus et par le procédé selon l'invention.

La figure 2 représente des diagrammes de variation de l'épaisseur E d'étain libre en microns à la surface de brins de cuivre étamé de 0,2 mm de diamètre, en fonction du temps H en heures d'un

4

traitement thermique à 150 C, les diagrammes A et B en trait plein correspondant à des brins non étuvés préalablement et le diagramme D en trait tireté à des brins préalablement étuvés pendant 16 H à 135 C à partir d'une épaisseur initiale de 0,9 micron.

La figure 3 représente des diagrammes de variation d'épaisseur analogues à ceux de la figure 2, le diagramme en trait plein F correspondant à un traitement thermique continu à 135 C, le diagramme G en trait tireté à un traitement thermique à 135 C interrompu après 16 H par un refroidissement complet et repris ensuite à la même température, et le diagramme J en trait mixte à un traitement à 135 C interrompu après 16 H par un refroidissement complet et repris ensuite à 130 C.

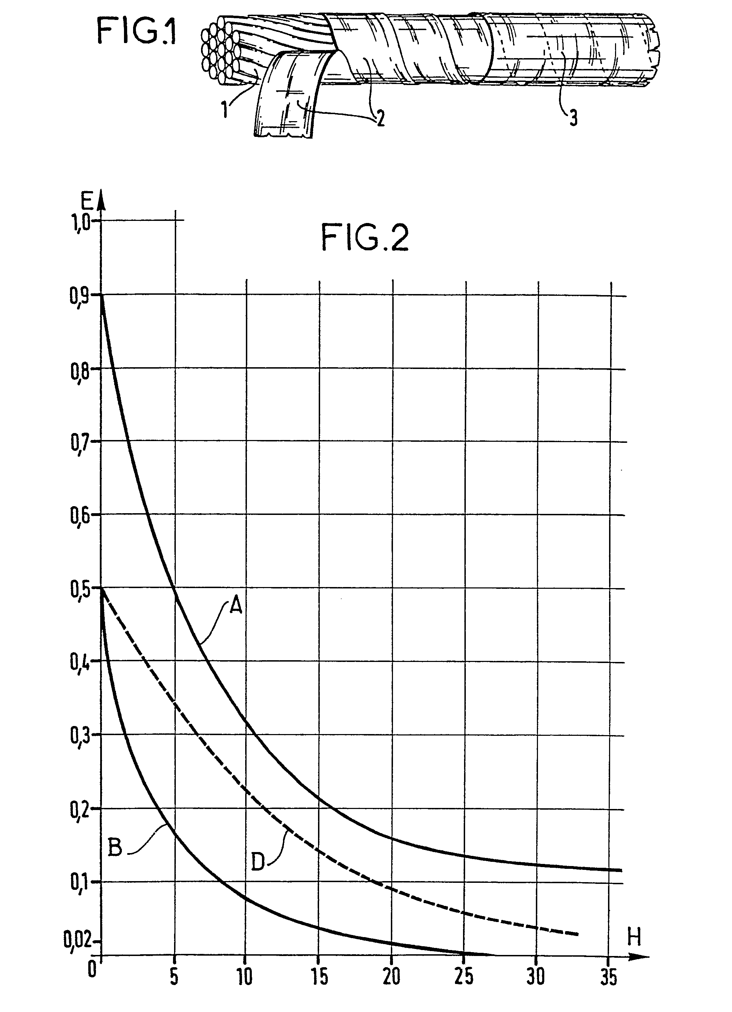

On voit sur la figure 1 un câble dont l'âme 1 est formée de 19 brins constitués chacun par un fil de cuivre étamé de 0,2 mm de diamètre, et est légèrement comprimée radialement par un rubanage à 2 à 6 couches de polyimide « Kapton F » réalisé avec un seul ou deux rubans, le ruban unique ou intérieur comportant un revêtement thermoplastique au moins sur sa face externe, le ruban externe éventuel étant revêtu sur ses deux faces.

Ce rubanage a été exécuté dans les conditions précédemment indiquées et est soumis à une opération de cuisson ou soudure des rubans, effectuée à une température excédant 275 C pendant 15 secondes à 3 minutes. L'ensemble est revêtu par un vernis 3 constitué de 2 à 10 couches appliquées au trempé, le câble étant soumis à chaque passe d'enduction de vernis à une opération de séchage/cuisson ou polymérisation à une température d'au moins 250 C pendant 15 secondes à 3 minutes. Ce vernis peut être une polyimide modifiée de teinte blanche.

Pour constituer un tel câble par le procédé selon l'invention on a utilisé des fils de cuivre étamé du commerce, pouvant être obtenus par étamage électrolytique ou au bain, mais auxquels on a fait subir un traitement thermique préalable tel qu'il se forme une « barrière de diffusion » avant toute opération de fabrication.

Cette barrière ralentira très sensiblement la vitesse de diffusion ultérieure de l'étain dans le cuivre ce qui permet de partir d'une épaisseur d'étain libre dite de sécurité pour le non collage des brins, tout en retrouvant de l'étain libre en fin de fabrication.

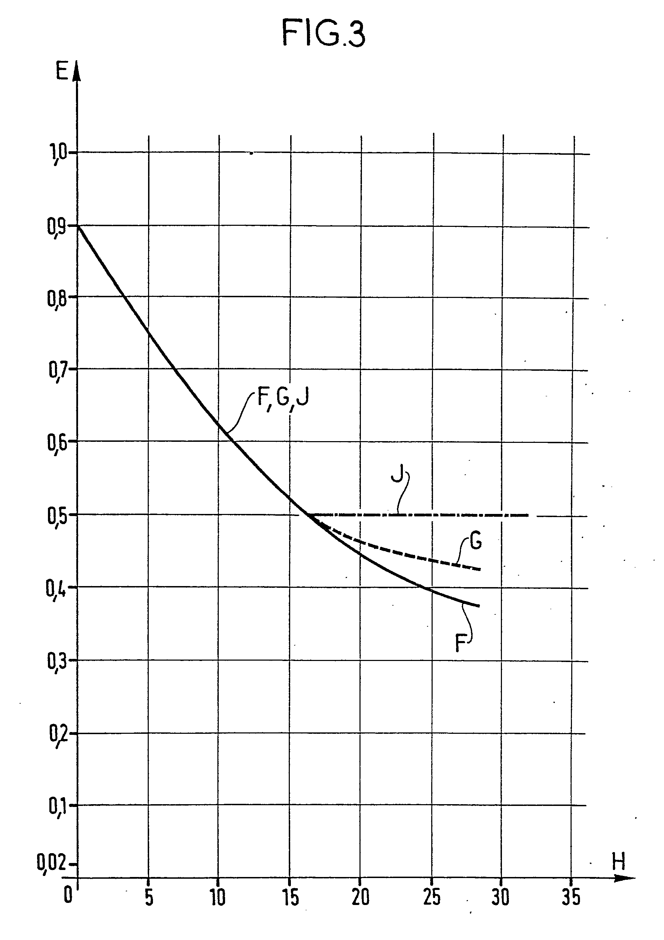

Le principe de l'invention sera mieux compris par l'examen des courbes de diffusion schématisées figures 2, 3 qui reflètent les lois de diffusion suivantes :

1. quelque soit le fil de cuivre étamé utilisé, c'est-à-dire quelque soit l'épaisseur initiale d'étain libre et l'histoire thermique préalable du fil on constate que la diffusion, à une température donnée, est d'abord rapide, puis se ralentit, ce qui correspond aux pentes différentes des courbes de diffusion et reflète parfaitement le rôle de retardateur ou de « barrière » de diffusion joué par les alliages étain/cuivre ;

2. l'efficacité de la « barrière de diffusion » dépend :
— de la température à laquelle elle a été créée, l'efficacité augmentant avec la température
— et de l'épaisseur de la couche d'alliage ;

3. toute « barrière de diffusion » créée à une température donnée empêchera totalement toute diffusion ultérieure à une température inférieure, ce qui entraîne une grande sécurité pour les utilisateurs de tels câbles : en service, il n'y aura aucun risque d'évolution, et de disparition de la couche d'étain libre, aussi faible soit-elle (quelques centièmes de micron) du moment qu'elle existe, la barrière de diffusion ayant été formée à une température plus haute que celles qui peuvent être rencontrées en service.

Le comportement de ces cuivres étamés est très différent de celui des cuivres étamés classiques, dont du reste le taux d'étain libre initial est beaucoup plus faible (moins de 0,3 micron pour un étamage courant).

Si l'on n'appliquait pas le procédé de la présente invention, pour obtenir, sur câble terminé, une couche superficielle d'étain libre, il serait indispensable d'utiliser des fils comportant à l'origine une épaisseur d'étain libre telle que, sans traitement thermique préalable, il y aurait forcément collage des brins de l'âme lors de la première opération thermique de soudure complète des rubans polyimide Kapton F.

Ainsi (fig. 2) pour des fils de 0,20 mm ; on peut considérer que les traitements thermiques complets de fabrication sont assez bien simulés par un étuvage de 24 H à 150 C. Or l'on constate ce qui suit :
— sans mise en œuvre de l'invention pour des épaisseurs d'étain libre initiales de :
— 0,9 micron, on retrouve de l'étain libre en final
— 0,5 micron, on ne retrouve pas d'étain libre en final
— pour une épaisseur d'étain libre initiale de 0,9 micron, inutilisable en l'état, car conduisant à des collages de brins en fabrication, mais ramenée avant utilisation de 0,9 à 0,5 micron grâce à un étuvage préalable de 16 heures à 135 C selon l'invention, il devient possible de répondre, en toute sécurité et avec toute la fiabilité voulue aux critères de :
— non collage des brins de l'âme en fabrication
— maintien, sur câble terminé d'une couche superficielle d'étain libre, non susceptible d'évolution ou de disparition au cours de la vie du câble.

A titre d'exemple, on indique ci-après, les épaisseurs d'étain libre mesurées aux diverses étapes de fabrication selon l'invention d'un câble aéronautique en jauge 20 (section : 0,6 mm$^2$) à 19 brins de 0,20 mm de diamètre :

| Stade de fabrication | Epaisseurs d'étain libre (en micron) valeurs mini/maxi |
|---|---|
| — A réception du cuivre étamé | 0,8/1,0 |
| — Après traitement thermique préalable (16 H à 135 C) | 0,42/0,50 |
| — Après rubanage/cuisson | 0,24/0,40 |
| — Après vernis/cuisson | 0,05/0,12 |

Il s'avère que, quel que soit le diamètre des brins le traitement thermique préalable doit amener l'épaisseur d'étain libre entre 1/3 et 3/4 de l'épaisseur initiale.

Le traitement thermique préalable selon l'invention peut évidemment être appliqué suivant diverses techniques, dont les plus connues consistent à utiliser pour le traitement sur les brins séparés ou sur l'âme multibrins :

— une étuve conduisant à un traitement de plusieurs heures entre 100 et 150 C environ,

— un four pour le passage du fil à plus haute température (150 à 300 C) mais des temps plus brefs (5 secondes à 10 minutes),

— ou un chauffage par effet Joule, tel qu'utilisé pour l'opération de recuit des fils tréfilés, cette liste n'étant nullement restrictive.

Il apparaît de ce qui précède qu'avant la présente invention, l'utilisation d'âmes multibrins en cuivre étamé apparaîssait incompatible ou hasardeuse avec la technique de fabrication des isolations en polyimide.

L'invention rend cette fabrication facilement réalisable avec toute la fiabilité voulue, tout en conservant à l'âme de cuivre étamé, à l'issue du cycle complet de fabrication, ses caractéristiques intrinsèques essentielles de souplesse, de soudabilité et de résistance à la corrosion. On obtient particulièrement les avantages suivants :

1. maintien de la protection électrochimique du cuivre par l'étain,

2. non dégradation de cette protection dans les conditions normales d'utilisation des câbles (température de service n'excédant pas 150 C),

3. conservation de la facilité de connexion des cuivres étamés, via toute procédure de soudure ou de sertissage, et,

4. maintien de la souplesse et de l'excellente tenue aux flexions alternées inhérentes aux câbles à âmes à brins divisés.

## Revendications

1. Procédé de fabrication de câble électrique souple avec âme multibrins étamée et isolation appliquée à haute température, procédé comportant les étapes suivantes :

— préparation d'une âme souple (1) constituée de plusieurs brins de cuivre étamés non soudés les uns aux autres,

— et isolation de cette âme par une gaine isolante (2, 3) appliquée à une température capable de créer un risque de fusion de l'étain et de soudure des brins étamés les uns aux autres, tout en entraînant une diffusion partielle de l'étain dans le cuivre,

— procédé caractérisé par le fait qu'il comporte en outre une étape de création de barrière de diffusion entre et/ou avant lesdites étapes de préparation d'une âme souple (1) et d'isolation de cette âme, cette étape de création d'une barrière de diffusion incluant un chauffage des brins individuels ou assemblés à une température et pendant une durée assurant une diffusion préalable de l'étain dans le cuivre en quantité suffisante pour entraîner un ralentissement de la diffusion ultérieure de l'étain dans le cuivre durant l'étape d'isolation, de manière que de l'étain libre subsiste à la fin de cette étape d'isolation bien que l'épaisseur d'étain libre sur les brins au début de cette étape soit suffisamment faible pour éviter le risque de soudure entre brins.

2. Procédé selon la revendication 1, caractérisé par le fait que ladite étape de création de barrière de diffusion se fait à une température comprise entre 100 et 300 C.

3. Procédé selon la revendication 2, caractérisé par le fait que ladite étape de création de barrière de diffusion est faite à une température et pendant une durée suffisante pour que l'épaisseur d'étain libre à la fin de cette étape soit comprise entre 1/3 et 3/4 de cette épaisseur au début de cette étape.

4. Procédé selon la revendication 3, caractérisé par le fait que l'épaisseur d'étain libre à la suite de ladite étape de création de barrière de diffusion est comprise entre 0,4 et 0,8 micron.

5. Procédé selon la revendication 4, caractérisé par le fait que l'épaisseur d'étain libre avant ladite étape de création de barrière de diffusion est comprise entre 0,6 et 1,2 micron.

6. Procédé selon la revendication 1, caractérisé par le fait que ladite étape d'isolation comporte elle même les étapes suivantes :

— enroulement autour de l'âme de plusieurs couches de ruban sous tension mécanique,

— la formation de ladite gaine isolante résultant de la solidarisation des couches de ruban grâce à un chauffage à une température constituant ladite température d'application de la gaine isolante,

— cette formation incluant un revêtement par un vernis séché et cuit à haute température.

7. Procédé selon la revendication 6, caractérisé par le fait que ledit ruban est fait d'une polyimide.

6

**Claims**

1. A method of manufacturing a flexible electric cable with a tinned multi-strand core on which an insulation is applied at a high temperature, said method including the following steps :
— preparing a flexible core (1) consisting of several tincoated copper strands which are not welded to each other,
— and insulating this core by an insulating sheath (2, 3) applied at a temperature at which the tin coating may melt and the tinned strands may weld together while causing partial diffusion of the tin into the copper,
— characterized in that it further comprises a step of forming a diffusion barrier between and/or before said steps of preparing a flexible core (1) and of insulating this core, this step of forming a diffusion barrier including the heating of the individual or assembled strands to a temperature and for a period of time which ensures previous diffusion of the tin into the copper to an extend which is sufficient to cause a slow-down of the subsequent diffusion of tin into the copper during the insulating step, so that there remains pure tin at the end of this insulating step, although the thickness of pure tin on the strands at the beginning of this step is sufficiently small in order to prevent the risk of welding between the strands.

2. A method according to claim 1, characterized in that said step of forming a diffusion barrier is carried out at a temperature lying between 100 and 300 °C.

3. A method according to claim 2, characterized in that said step of forming a diffusion barrier is carried out at a temperature and during a period which are sufficient for the thickness of pure tin to lie at the end of this step between 1/3 and 3/4 of the thickness of pure tin at the beginning of said step.

4. A method according to claim 3, characterized in that the thickness of pure tin after said step during which a diffusion barrier is formed, lies between 0,4 and 0,8 microns.

5. A method according to claim 4, characterized in that the thickness of pure tin before said step during which a diffusion barrier is formed lies between 0,6 and 1,2 microns.

6. A method according to claim 1, characterized in that said insulating step itself includes the following steps :
— wrapping several layers of tape under mechanical tension around the core,
— forming said insulating sheath which results from joining the layers of tape together by heating to a temperature which is said temperature at which the insulating sheath is applied,
— said forming including a coating with a varnish dried and cured at a high temperature.

7. A method according to claim 6, characterized in that said tape is made of polyimide.

**Ansprüche**

1. Verfahren zur Herstellung eines biegsamen elektrischen Kabels mit einer verzinnten viellitzigen Seele und einer bei hoher Temperatur aufgebrachten Isolierung, wobei dieses Verfahren die folgenden Schritte aufweist :
— Herstellung einer aus mehreren verzinnten Kupferlitzen, die nicht miteinander verschweißt sind, bestehenden biegsamen Seele (1),
— und Isolierung dieser Seele durch eine isolierende Hülle (2, 3), die bei einer Temperatur aufgebracht wird, welche eine Gefahr des Schmelwens des Zinns und des Verschweißens der verzinnten Litzen miteinander mit sich bringen kann und eine partielle Diffusion des Zinns in das Kupfer nach sich zieht, dadurch gekennzeichnet, daß das Verfahren außerdem einen Schritt der Erzeugung einer Diffusionsbarriere zwischen und/oder vor den genannten Schritten der Herstellung einer biegsamen Seele (1) und der Isolierung dieser Seele aufweist, wobei dieser Schritt der Erzeugung einer Diffusionsbarriere eine Erhitzung der einzelnen oder der Gesamtheit der Litzen bis zu einer Temperatur und während einer Zeitdauer umfaßt, die eine Vorabdiffusion des Zinns in das Kupfer in ausreichendem Umfang bewirkt, um eine Verlangsamung der späteren Diffusion des Zinns in das Kupfer während des Isolierungsschritts zu erreichen, so daß noch freies Zinn am Ende dieses Isolierungsschritts vorhanden ist, obwohl die Dicke des freien Zinns auf den Litzen am Anfang dieses Schritts gering genug ist, um die Gefahr eines Verschweißens zwischen des Litzen auszuschließen.

2. Verfahren nach Anspruch 1, dadurch gekennzeichnet, daß der Schritt der Erzeugung einer Diffusionsbarriere bei einer Temperatur zwischen 100 und 300 °C durchgeführt wird.

3. Verfahren nach Anspruch 2, dadurch gekennzeichnet, daß der Schritt der Erzeugung einer Diffusionsbarriere bei einer Temperatur und während einer Zeitdauer erfolgt, die ausreichen, damit die Dicke des freien Zinns am Ende dieses Schritts zwischen 1/3 und 3/4 dieser Dicke am Anfang dieses Schritts beträgt.

4. Verfahren nach Anspruch 3, dadurch gekennzeichnet, daß die Dicke des freien Zinns am Ende des Schritts zur Erzeugung einer Diffusionsbarriere zwischen 0,4 und 0,8 Mikron liegt.

5. Verfahren nach Anspruch 4, dadurch gekennzeichnet, daß die Dicke des freien Zinns vor dem Schritt der Erzeugung einer Diffusionsbarriere zwischen 0,6 und 1,2 Mikron liegt.

6. Verfahren nach Anspruch 1, dadurch gekennzeichnet, daß der Isolierschritt selbst fogende Schritte aufweist :

**0 030 721**

— Umwickeln der Seele mit mehreren Schichten Bands unter mechanischer Spannung,

— die Bildung der isolierenden Hülle, die aus der Verbindung der Bandschichten aufgrund einer Erhitwung auf eine Temperatur resultiert, welche die genannte Anwendungstemperatur der isolierenden Hülle ist,

— wobei diese Bildung eine Beschichtung mit einem getrockneten und bei hoher Temperatur gehärteten Lack einschließt.

7. Verfahren nach Anspruch 6, dadurch gekennzeichnet, daß das Band aus einem Polyimid besteht.

# FIG.1

# FIG.2

## FIG.3